# EUROPÄISCHE PATENTSCHRIFT

(11) **EP 3 867 113 B1**
(45) Veröffentlichungstag und Bekanntmachung des Hinweises auf die Patenterteilung: **09.08.2023**
(21) Anmeldenummer: 19794900.1
(22) Anmeldetag: 14.10.2019
(51) Int. Cl.: B60T 13/66, B60T 13/68, B60T 7/10

(54) **VERFAHREN ZUM VERZÖGERN EINES KRAFTFAHRZEUGS BEI EINER NOTBREMSUNG UND KRAFTFAHRZEUG**
METHOD FOR DECELERATING A MOTOR VEHICLE DURING EMERGENCY BRAKING AND MOTOR VEHICLE
PROCÉDÉ POUR LE RALENTISSEMENT D'UN VÉHICULE À MOTEUR LORS D'UN FREINAGE D'URGENCE ET VÉHICULE À MOTEUR

(30) Priorität: 18.10.2018 DE 102018217808
(43) Veröffentlichungstag der Anmeldung: 25.08.2021
(73) Patentinhaber: VOLKSWAGEN AKTIENGESELLSCHAFT, 38440 Wolfsburg (DE)
(72) Erfinder: WITTE, Bastian, 38179 Groß Schwülper (DE)
(86) Internationale Anmeldenummer: PCT/EP2019/077776
(87) Internationale Veröffentlichungsnummer: WO 2020/078901

(56) Entgegenhaltungen:
- DE-A1-102011 110 892
- DE-A1-102015 203 737

## Beschreibung

Die Erfindung betrifft ein Verfahren zum Verzögern eines Kraftfahrzeugs zumindest bei einer Notbremsung, bei welchem ein Aufbringen eines ersten Bremsmoments auf wenigstens ein Vorderrad des Kraftfahrzeugs durch zumindest eine Betriebsbremsanlage des Kraftfahrzeugs erfolgt. Ein weiterer Aspekt der Erfindung betrifft ein Kraftfahrzeug, umfassend eine Betriebsbremsanlage, mittels welcher ein erstes Bremsmoment auf wenigstens ein Vorderrad des Kraftfahrzeugs aufbringbar ist, sowie wenigstens eine von der zumindest einen Betriebsbremsanlage verschiedene Parkbremse.

Betriebsbremsanlagen von modernen Kraftfahrzeugen, beispielsweise Personenkraftwagen, weisen häufig hydraulische Bremsen sowohl an einer Vorderachse als auch einer Hinterachse des Kraftfahrzeugs auf. Diese hydraulischen Bremsen werden als Betriebsbremsen eingesetzt, um das Kraftfahrzeug beim Betrieb, also während der Fahrt wirksam zu verzögern und damit abzubremsen. Der Fahrer des Kraftfahrzeugs betätigt dabei ein Bremspedal und baut, unterstützt durch einen Bremskraftverstärker, hydraulischen Bremsdruck auf, welcher über die Betriebsbremsen auf jeweilige, der Vorderachse bzw. der Hinterachse zugeordnete Räder des Kraftfahrzeugs wirkt.

Um ein Wegrollen des Kraftfahrzeugs im Stillstand, insbesondere beim Parken an einem Hang, zu unterbinden, ist es üblich, eine sogenannte Feststellbremse des Kraftfahrzeugs zu verwenden. Als Feststellbremsen werden häufig elektromechanische Parkbremsen (kurz: EPB) eingesetzt. Dabei betätigt ein Elektromotor ein selbsthemmendes Getriebe, welches üblicherweise eine Spindel umfasst, wodurch ein jeweiliger, einem Rad des Kraftfahrzeugs zugeordneter Bremsbelag der Betriebsbremse gegen eine Bremsscheibe gedrückt wird, um dieses Rades festzuhalten. Das selbsthemmende Getriebe wandelt üblicherweise eine durch den Elektromotor bewirkte, rotatorische Bewegung in eine translatorische Bewegung um, weshalb das selbsthemmende Getriebe auch als Rot/Trans-Getriebe (Rotatorisch/Translatorisch-Getriebe) bezeichnet werden kann. Bei schweren, üblicherweise mit Heckantrieb oder Allradantrieb ausgestatteten Kraftfahrzeugen, werden alternativ kleine Trommelbremsen als Parkbremsen an der Hinterachse verbaut.

Aus der DE 10 2012 021 056 A1 ist ein Fahrzeugbremssystem bekannt, bei welchem mindestens eine Reibbremse eine elektromechanische Bremse mit einem Radbremskolben aufweist, der sowohl hydraulisch über einen mit dem Bremspedal zusammenwirkenden Hauptbremszylinder als auch elektromechanisch verfahrbar ist und der auf die Reibbremse einwirkt. Die elektromechanische Bremse ist in einem ersten Bereich des Hubs des Bremspedals ausschließlich elektromechanisch betätigbar und die hydraulische Betätigung der Reibbremse ist dabei drucklos geschaltet. In einem zweiten Bereich des Hubs des Bremspedals ist die elektromechanische Bremse ausschließlich von der hydraulischen Betätigung betätigbar. Unter normalen Betriebsbedingungen des Fahrzeugs wird der Durchgriff der Hydraulik auf die Reibbremse verhindert. Somit kann bei einer Vollbremsung bis Anschlag gebremst werden und das Bremspedal erreicht seinen Endanschlag am Ende des ersten Bereichs des Pedalhubs. Bis dahin wird nur rein elektrisch durch Rekuperation und elektromechanisch gebremst.

Die DE 10 2007 036 261 A1 beschreibt ein Bremssystem für ein Fahrzeug, mit zwei Bremskreisen, wobei bei einem Ausfall von mindestens zwei Komponenten des Bremssystems eine Diagonale von bremsbereiten Rädern abgebremst werden kann. Ebenso können in einer entsprechenden Situation auch drei Radaktoreinrichtungen des Bremssystems die ihnen zugeordneten bremsbereiten Räder zum Stillstand bringen. Bei einer automatischen Abbremsung können bremsbereite Räder bis zum Stillstand des Fahrzeugs mit dem halben maximalen Bremsmoment belegt werden. Anschließend kann eine Parkbremse aktiviert werden.

Aus der DE 10 2011 110 892 A1 ist ein Fahrzeug-Bremssystem bekannt, wobei bei einem Ausfall einer Bremssystem-Hydraulik bei einem Bremswunsch ersatzweise die Aktuatoren einer elektrischen Parkbremse aktiviert werden. Die Aktivierung der Aktuatoren der elektrischen Parkbremse erfolgt automatisch.

Aus der DE 10 2015 203 737 A1 ist ein Fahrzeugbremssystem bekannt, wobei während einer autonomen Notbremsung die Betriebsbremse an den Vorderrädern und die Feststellbremse an den Hinterrädern angesteuert werden.

Der Erfindung liegt die Aufgabe zugrunde, ein Verfahren zum Verzögern eines Kraftfahrzeugs sowie ein Kraftfahrzeug zu schaffen, durch welche ein besonders wirksames Verzögern des Kraftfahrzeugs zumindest bei einer Notbremsung erfolgen kann.

Diese Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Ein erster Aspekt der Erfindung betrifft ein Verfahren zum Verzögern eines Kraftfahrzeugs zumindest bei einer Notbremsung, bei welchem ein Aufbringen eines ersten Bremsmoments auf wenigstens ein Vorderrad des Kraftfahrzeugs durch zumindest eine Betriebsbremsanlage des Kraftfahrzeugs erfolgt. Die Betriebsbremsanlage dient dazu, das Kraftfahrzeug im normalen Betrieb, also im Fahrbetrieb, zu verlangsamen, also mit anderen Worten zu verzögern (abzubremsen) und bedarfsgerecht zum Stillstand zu bringen. Das wenigstens eine Vorderrad kann einem Bremskreislauf der Betriebsbremsanlage zugeordnet sein. Diesem Bremskreislauf kann auch ein, dem wenigstens einen Vorderrad diagonal gegenüberliegendes Hinterrad des Kraftfahrzeugs zugeordnet sein, sodass durch Betätigung der Betriebsbremsanlage über diesen Bremskreislauf das wenigstens eine Vorderrad sowie das diesem Vorderrad diagonal gegenüberliegende Hinterrad gebremst werden können, was auch als Diagonalaufteilung bezeichnet werden kann. Alternativ können auch alle, einer Achse des Kraftfahrzeugs zugeordneten Betriebsbremsen der Betriebsbremsanlage zu einem Bremskreislauf zusammengefasst werden, was auch als Schwarz-Weiß-Aufteilung bezeichnet werden kann.

Gemäß der Erfindung wird wenigstens eine von der zumindest einen Betriebsbremsanlage verschiedene Parkbremse durch eine Regeleinrichtung des Kraftfahrzeugs aktiviert und dadurch ein zweites Bremsmoment auf das wenigstens eine Vorderrad aufgebracht, während das erste Bremsmoment aufgebracht wird. Dies ist von Vorteil, da hierdurch zumindest bei der Notbremsung die Summe aus erstem Bremsmoment und zweitem Bremsmoment auf das wenigstens eine Vorderrad wirkt, um dieses abzubremsen und dadurch das Kraftfahrzeug zu verzögern. Dadurch kann ein besonders wirksames Verzögern des Kraftfahrzeugs zumindest bei der Notbremsung erfolgen. Die zweite Bremskraft kann ebenso wie die erste Bremskraft als jeweilige Reibkraft auf zumindest einen, dem wenigstens einen Vorderrad zugeordneten Bremsbelag wirken.

Der Erfindung liegt die Erkenntnis zugrunde, dass es selbst bei einer modernen Betriebsbremsanlage, welche beispielsweise ein 6-Kolben-Schlupfregelsystem umfassen kann, im Falle einer plötzlichen Notbremsung bis zu 400 ms dauern kann, bis ein Blockierdruck eines Rades (hier: des wenigstens einen Vorderrades) des Kraftfahrzeugs erreicht oder überschritten wird. Beim Erreichen des Blockierdrucks, welcher üblicherweise bei einem Wert von beispielsweise 80 bar liegen kann, ist die aus dem Blockierdruck resultierende, erste Bremsmoment ausreichend groß, um theoretisch ein Blockieren des Rades (Vorderrades) zu bewirken, was eine Voraussetzung dafür ist, dass ein Antiblockiersystem des Kraftfahrzeugs aktiviert und dadurch eine maximal mögliche Bremswirkung, also mit anderen Worten die maximal mögliche Verzögerung, des Kraftfahrzeugs erzielt wird. Durch die Erfindung kann zu Beginn dieser Dauer oder innerhalb dieser Dauer und zumindest bis zum Erreichen des Blockierdrucks das zweite Bremsmoment zusätzlich zum ersten Bremsmoment auf das wenigstens eine Vorderrad aufgebracht werden, um bei der Notbremsung eine schnelle Bremswirkung zu erzielen. Die Erfindung ermöglicht es insbesondere auf eine Überdimensionierung der Betriebsbremsanlage, beispielsweise in Form einer Erhöhung einer Motorleistung einer Rückförderpumpe der Betriebsbremsanlage gegebenenfalls in Kombination mit einer Erhöhung einer Pumpenleistung einer Hydraulikpumpe der Betriebsbremsanlage, zu verzichten, wodurch Gewicht und Kosten eingespart werden können. Der Erfindung liegt weiterhin die Erkenntnis zugrunde, dass der Bedarf der Notbremsung nur in besonders seltenen Fällen vorliegt, sodass es besonders sinnvoll ist, das zweite Bremsmoment durch die Parkbremse auf das wenigstens eine Vorderrad aufzubringen, während das erste Bremsmoment durch die Betriebsbremsanlage aufgebracht wird, anstatt die besagte Überdimensionierung der Betriebsbremsanlage zu verwirklichen.

Beispielsweise können bei einem dem wenigstens einen Vorderrad zugeordneten Bremssattel ein Bremskolben einer Radbremse der Betriebsbremsanlage sowie die Parkbremse auf einen gleichen, zum Abbremsen des wenigstens einen Vorderrades vorgesehenen Bremsbelag wirken. Durch Betätigung der Betriebsbremsanlage kann der Bremsbelag beispielsweise auf eine Bremsscheibe gedrückt werden, um das erste Bremsmoment auf das Vorderrad auszuüben. Die Parkbremse kann auf denselben Bremsbelag wirken, um das zweite Bremsmoment auf das Vorderrad auszuüben. Die Betriebsbremsanlage und die Parkbremse können in Summe eine Anpresskraft auf den Bremsbelag ausüben, mit der dieser Bremsbelag zumindest bei der Notbremsung gegen die Bremsscheibe gedrückt werden kann, um das Vorderrad abzubremsen. Ist die Betriebsbremsanlage beispielsweise hydraulisch und die Parkbremse elektromechanisch betrieben, so kann die Anpresskraft als Summe aus einer mittels der Betriebsbremsanlage hydraulisch aufgebrachten, ersten Spannkraft und einer mittels der Parkbremse elektromechanisch aufgebrachten, zweiten Spannkraft ausgeübt werden. Dadurch kann ein aus der Anpresskraft resultierendes Gesamtbremsmoment an dem zumindest einen Vorderrad wirken, wobei das Gesamtbremsmoment aus dem ersten Bremsmoment und dem zweiten Bremsmoment besteht. Das erste Bremsmoment kann dabei aus der ersten Spannkraft, welche nur durch die Betriebsbremsanlage erzeugt wird, resultieren, wohingegen das zweite Bremsmoment aus der zweiten Spannkraft resultieren kann, welche nur durch die Parkbremse erzeugt wird.

Als Notbremsung wird im Sinne der Erfindung eine hohe Verzögerung des Fahrzeugs von beispielsweise mehr als 3 m/s² verstanden. Zusätzlich oder alternativ kann die Notbremsung bei einer Dynamik der Verzögerung von mehr als 10m/s³ vorliegen. Die Dynamik, welche auch als Ruck bezeichnet werden kann, entspricht dabei der zeitlichen Ableitung der Verzögerung. Derart große Werte für die Verzögerung und Dynamik werden im normalen Fahrbetrieb nicht erreicht.

Das Kraftfahrzeug kann vorzugsweise für einen autonomen Fahrbetrieb ausgebildet sein. Dies ermöglicht eine von manuellen Eingriffen unabhängige bzw. freie und damit besonders schnelle und wirksame Verzögerung des Kraftfahrzeugs. So kann das Kraftfahrzeug beispielsweise in einer "Autonomiestufe 5" und damit voll automatisiert betrieben werden. Bei der Autonomiestufe 5 ist es nicht zuletzt zur Gewichtseinsparung sinnvoll, wenn auf ein Bremspedal, einen Bremskraftverstärker der Betriebsbremsanlage sowie auf jeweilige, ein Bremspedalgefühl betreffende Bauteile bei dem Kraftfahrzeug verzichtet wird. Wenn ein Abbremsen (Verzögern) des Kraftfahrzeugs nötig ist, so kann beispielsweise eine automatische Fahrfunktion des Kraftfahrzeugs von der Regeleinrichtung, welche auch als Bremsregelsystem bezeichnet werden kann, die Verzögerung des Kraftfahrzeugs anfordern. Durch die automatische Fahrfunktion kann der autonome Fahrbetrieb des Kraftfahrzeugs erfolgen. Die Regeleinrichtung kann unter Berücksichtigung von fahrdynamischen Eigenschaften des Kraftfahrzeugs und einer bekannten Momentenaufbaudynamik der Betriebsbremsanlage und der Parkbremse eine bedarfsgerechte Bremsmomentenverteilung für alle Radbremsen der Betriebsbremsanlage ermitteln.

Erfindungsgemäß werden das erste Bremsmoment und das zweite Bremsmoment nur dann gleichzeitig aufgebracht, wenn eine der Regeleinrichtung bekannte Dynamik eines Aufbaus des ersten Bremsmoments geringer ist als eine von einer automatischen Fahrfunktion des Kraftfahrzeugs geforderte Dynamik des Aufbaus des ersten Bremsmoments. Dadurch kann ein besonders bedarfsgerechtes Aktivieren der Parkbremse erfolgen, wobei ein unnötiger Einsatz der Parkbremse, beispielsweise bei einer von der Notbremsung verschiedenen Bremsung, verhindert und dadurch unnötiger Verschleiß der Parkbremse vermieden werden kann.

In einer vorteilhaften Weiterbildung der Erfindung wird die Parkbremse während des Verzögerns wieder deaktiviert, wenn während des Verzögerns eine Eingriffsschwelle eines Antiblockiersystems des Kraftfahrzeugs erreicht wird. Dies ist von Vorteil, da hierdurch die Parkbremse besonders bedarfsgerecht und über einen besonders kurzen Zeitraum, nämlich bis das erste Bremsmoment ausreichend groß ist, um ein gewünschtes Verzögern des Kraftfahrzeugs ohne das zweite Bremsmoment zu bewirken, betrieben werden kann. Dadurch kann ein unnötiger Verschleiß bzw. eine Überlastung der Parkbremse vermieden werden. Bei Erreichen der Eingriffsschwelle kann durch das Antiblockiersystem (Bestandteil eines ersten Bremssytems) ein Blockieren des wenigstens einen Vorderrades verhindert werden.

In einer weiteren vorteilhaften Weiterbildung der Erfindung werden das erste Bremsmoment und das zweite Bremsmoment zumindest beim Beginn des Verzögerns des Kraftfahrzeugs gleichzeitig aufgebracht. Dies ist von Vorteil, da hierdurch besonders schnell eine maximal mögliche Bremswirkung an dem wenigstens einen Vorderrad erzielt werden kann. In vorteilhafter Weise kann durch die Summe aus dem ersten Bremsmoment und dem zweiten Bremsmoment ein zeitlich sehr schneller Aufbau einer maximal durch einen Reifen des wenigstens einen Vorderrads übertragbaren Bremskraft bewirkt werden.

In einer weiteren vorteilhaften Weiterbildung der Erfindung wird das zweite Bremsmoment nach einem Zeitraum wieder deaktiviert, wobei der Zeitraum einer Dauer von 0,05 s bis 2 s, bevorzugt 0,1 s bis 1 s entspricht. Das zweite Bremsmoment kann in vorteilhafter Weise zum Schutz der Parkbremse deaktiviert werden, während das erste Bremsmoment noch auf das wenigstens eine Vorderrad ausgeübt wird. Die Dauer von 0,05 s bis 2 s ist von Vorteil, da bei dieser Dauer eine übermäßige Belastung der Parkbremse vermieden wird. Bei der Dauer von 0,1 s bis 1 s kann die Belastung der Parkbremse besonders bedarfsgerecht erfolgen. Nach diesem beschriebenen Zeitraum ist das erste Bremsmoment ausreichend groß um die erwünschte Verzögerung (Abbremsung) zu gewährleisten. Die Unterstützung durch die Parkbremse wird zu deren Bauteilschutz (z.B. Verschleiß) nach diesem Zeitraum nicht mehr benötigt.

In einer weiteren vorteilhaften Weiterbildung der Erfindung wird die Parkbremse elektrisch betrieben. Dadurch kann die Parkbremse besonders benutzerfreundlich betrieben werden. Die Parkbremse kann beispielsweise durch die Regeleinrichtung aktiviert und deaktiviert werden.

In einer weiteren vorteilhaften Weiterbildung der Erfindung wird die Betriebsbremsanlage hydraulisch betrieben. Dies ist von Vorteil, da anhand der hydraulisch betriebenen Betriebsbremsanlage eine besonders große Bremsleistung erzielt werden kann.

In einer weiteren vorteilhaften Weiterbildung der Erfindung wird ein zum Aufbringen des ersten Bremsmoments verwendeter Bremsdruck durch eine hydraulische Rückförderpumpe der Betriebsbremsanlage aufgebaut. Dies ist von Vorteil, da hierdurch der Aufbau des Bremsdrucks über einen Bremskraftverstärker entfallen kann. Dies ist insbesondere von Vorteil, wenn das Kraftfahrzeug für den autonomen Fahrbetrieb, beispielsweise der Autonomiestufe 5, ausgebildet ist, und dementsprechend keinen Bremskraftverstärker aufweisen muss. Die hydraulische Rückförderpumpe der Betriebsbremsanlage kann durch ein Schlupfregelsystem des Kraftfahrzeugs angesteuert werden. Das Schlupfregelsystem kann ein Antiblockiersystem umfassen. Darüber hinaus kann das Schlupfregelsystem eine Antriebsschlupfregelung und/oder eine Regelung zur Verhinderung von Schleudern des Kraftfahrzeugs, bekannt als ESP, umfassen.

Ein zweiter Aspekt der Erfindung betrifft ein Kraftfahrzeug, umfassend eine Betriebsbremsanlage, mittels welcher ein erstes Bremsmoment auf wenigstens ein Vorderrad des Kraftfahrzeugs aufbringbar ist sowie wenigstens eine von der zumindest einen Betriebsbremsanlage verschiedene Parkbremse. Gemäß der Erfindung umfasst das Kraftfahrzeug eine Regeleinrichtung, welche dazu eingerichtet ist, eine Notbremsung des Kraftfahrzeugs zu erkennen und bei erkannter Notbremsung die wenigstens eine Parkbremse zu aktivieren, um während des Aufbringens des ersten Bremsmoments mittels der wenigstens einen Parkbremse ein zweites Bremsmoment auf das wenigstens eine Vorderrad aufzubringen. Das Kraftfahrzeug ist dazu eingerichtet, das erste Bremsmoment und das zweite Bremsmoment nur dann gleichzeitig aufzubringen, wenn eine der Regeleinrichtung bekannte Dynamik eines Aufbaus des ersten Bremsmoments geringer ist als eine von einer automatischen Fahrfunktion des Kraftfahrzeugs geforderte Dynamik des Aufbaus des ersten Bremsmoments. Dadurch ist ein besonders wirksames Verzögern des Kraftfahrzeugs bei der Notbremsung ermöglicht.

Die im Zusammenhang mit dem erfindungsgemäßen Verfahren vorgestellten Merkmale sowie deren Vorteile gelten entsprechend für das erfindungsgemäße Kraftfahrzeug und umgekehrt.

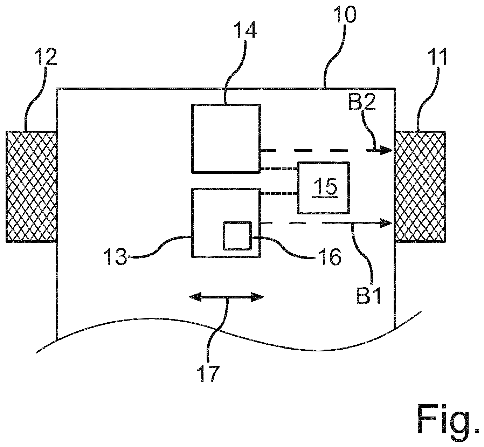

Im Folgenden ist ein Ausführungsbeispiel der Erfindung beschrieben. Hierzu zeigt die einzige Figur eine schematische Darstellung eines Teilbereichs eines Kraftfahrzeugs, welches eine Betriebsbremse, eine Parkbremse und eine Regeleinrichtung umfasst.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur sind funktionsgleiche Elemente jeweils mit denselben Bezugszeichen versehen.

Die einzige Fig. zeigt schematisch einen Vorderwagen und damit einen Teilbereich eines Kraftfahrzeugs 10. Das Kraftfahrzeug 10 umfasst eine hydraulisch betriebene Betriebsbremsanlage 13, mittels welcher ein erstes Bremsmoment B1 auf ein Vorderrad 11 von einander in Fahrzeugquerrichtung 17 des Kraftfahrzeugs 10 gegenüberliegenden Vorderrädern 11, 12 des Kraftfahrzeugs 10 aufbringbar ist. Das Bremsmoment B1 kann mittels einer hier nicht weiter gezeigten Radbremse der Betriebsbremsanlage 13 auf das Vorderrad 11 ausgeübt werden. Das Kraftfahrzeug 10 umfasst des Weiteren wenigstens eine von der zumindest einen Betriebsbremsanlage 13 verschiedene, vorliegend elektrisch betriebene Parkbremse 14, welche auch als EPB abgekürzt werden kann. Darüber hinaus umfasst das Kraftfahrzeug 10 eine Regeleinrichtung 15, welche dazu eingerichtet ist, eine Notbremsung des Kraftfahrzeugs 10 zu erkennen und bei erkannter Notbremsung die Parkbremse 14 zu aktivieren, um während des Aufbringens des ersten Bremsmoments mittels der wenigstens einen Parkbremse 14 ein zweites Bremsmoment B2 auf das Vorderrad 11 aufzubringen. Die hydraulisch betriebene Betriebsbremsanlage 13 kann vorliegend besser geregelt werden als die elektrisch betriebene Parkbremse 14, da eine Regeldynamik der hydraulisch betriebenen Betriebsbremsanlage 13 höher ist als die der elektromechanisch betriebenen Parkbremse 14. Dementsprechend ist das erste Bremsmoment B1 besser regelbar als das zweite Bremsmoment B2.

Das weitere Vorderrad 12 kann mittels einer weiteren, hier nicht gezeigten Parkbremse, sowie mittels einer weiteren, hier nicht weiter gezeigten Radbremse der Betriebsbremsanlage 13 in zu dem Vorderrad 11 analoger Weise gebremst werden, was vorliegend jedoch nicht weiter beschrieben wird.

Zum Verzögern des Kraftfahrzeugs 10, wird das erste Bremsmoment B1 auf das Vorderrad 11 des Kraftfahrzeugs 10 durch die Betriebsbremsanlage 13 des Kraftfahrzeugs ausgeübt. Anhand der Betriebsbremsanlage 13 können auch jeweilige, hier nicht weiter dargestellte Hinterräder des Kraftfahrzeugs 10 gebremst werden, was vorliegend jedoch nicht weiter gezeigt ist. Die Parkbremse 14 wird zum Durchführen der Notbremsung durch die Regeleinrichtung 15 des Kraftfahrzeugs 10 aktiviert und dadurch das zweite Bremsmoment B2 auf das Vorderrad 11 aufgebracht, während das erste Bremsmoment B1 auf das Vorderrad 11 aufgebracht wird.

Als Notbremsung wird eine hohe Verzögerung des Fahrzeugs 10 von beispielsweise mehr als 3 m/s² einhergehend mit einer hohen Dynamik, welche größer als 10m/s³ sein kann, verstanden, um einen Unfall zu verhindern. Solch hohe Verzögerungen und Dynamiken werden im normalen Fahrbetrieb nicht erreicht. Das Kraftfahrzeug 10 kann beispielsweise Umgebungssensoren aufweisen, mittels welchen eine Abstandsänderung zwischen dem fahrenden Kraftfahrzeug 10 und einem Objekt erfasst und als entsprechendes Signal an die Regeleinrichtung 15 übertragen wird. Anhand des Signals kann durch die Regeleinrichtung 15 bewertet werden, ob die Notbremsung aufgrund der Abstandsänderung erforderlich ist, um einen Zusammenprall zwischen dem Objekt und dem Kraftfahrzeug 10 zu verhindern.

Die Parkbremse 14 wird durch die Regeleinrichtung 15 deaktiviert, sobald das erste Bremsmoment B1 einen Momentenbetrag erreicht, bei welchem das erste Bremsmoment B1 bei deaktiviertem zweitem Bremsmoment B2 ausreichend groß ist, um ein wunschgemäßes Verzögern des Kraftfahrzeugs 10 bei der Notbremsung zu ermöglichen.

Ein zum Aufbringen des ersten Bremsmoments B1 verwendeter Bremsdruck kann durch jeweilige hydraulische Rückförderpumpen 16 der Betriebsbremsanlage 13 oder eines Schlupfregelsystems des Kraftfahrzeugs 10 aufgebaut werden.

Die Parkbremse 14 wird außerdem während des Verzögerns deaktiviert, wenn während des Verzögerns eine Eingriffsschwelle eines Antiblockiersystems des Kraftfahrzeugs 10 erreicht wird.

Das Antiblockiersystem des Kraftfahrzeugs 10 sorgt dafür, dass das Vorderrad 11 nicht blockiert, und dementsprechend durch geregelten Bremseingriff anhand des Antiblockiersystems eine maximal mögliche Verzögerung bei der Notbremsung des Kraftfahrzeugs 10 erfolgen kann.

Durch das vorliegende Verfahren bzw. durch das vorliegende Kraftfahrzeug kann die Parkbremse 14 bedarfsgerecht und wirksam bei der Notbremsung und damit selektiv im Bedarfsfall einer plötzlichen, schnellen Bremswirkung eingesetzt werden, wobei ein ohnehin vorhandener Parkbrems-Motor (EPB-Motor) der elektronischen Parkbremse 14 auf das Vorderrad 11 parallel und damit gleichzeitig zu den Rückförderpumpen betrieben werden kann. Somit kann der ohnehin vorhandene Parkbrems-Motor, welcher als Elektromotor ausgebildet ist, zur Betätigung eines Bremsbelags und dadurch bedingten Erzeugen des zweiten Bremsmoments B2 am Vorderrad 11 eingesetzt werden, um zumindest kurzzeitig die Rückförderpumpen beim Verzögern des Kraftfahrzeugs 10 zu unterstützen. Auf den Bremsbelag kann dann die Summe aus einem durch Betätigung der Betriebsbremsanlage 13 bei der Notbremsung aufgebrachten ersten Spannkraft und einer, mittels der Parkbremse 14 bei der Notbremsung aufgebrachten, zweiten Spannkraft und damit sozusagen die Summe aus hydraulischer und elektromechanischer Spannkraft wirken. Aus der ersten und zweiten Spannkraft resultieren die Bremsmomente B1, B2.

Eine übermäßige Belastung der Parkbremse 14 kann bei der Notbremsung vermieden werden, wenn das zweite Bremsmoment B2 deaktiviert wird, sobald der Bremsdruck den Wert (Druckwert) des Blockierdrucks erreicht, also mit anderen Worten der durch die Rückförderpumpe(n) erzeugte Bremsdruck (hier: Hydraulikdruck) ausreichend hoch ist, um theoretisch das Blockieren des Vorderrades 11 zu bewirken, wobei jedoch das tatsächliche Blockieren durch das Antiblockiersystem verhindert wird, wenn die Eingriffsschwelle des Antiblockiersystems erreicht wird. Vorzugsweise wirkt die zweite Bremskraft B2 über einen Zeitraum von beispielsweise rund 300 ms bis 500 ms und wird anschließend sofort wieder deaktiviert. Das erste Bremsmoment B1 und das zweite Bremsmoment B2 werden zudem nur dann, beispielsweise über diesen Zeitraum, gleichzeitig aufgebracht, wenn eine der Regeleinrichtung 15 bekannte Dynamik eines Aufbaus des ersten Bremsmoments B1 geringer ist, als eine von einer automatischen Fahrfunktion des Kraftfahrzeugs 10 geforderte Dynamik des Aufbaus des ersten Bremsmoments B1.

Insgesamt zeigt das Beispiel, wie durch die Erfindung die Parkbremse 14 während der Fahrt des Kraftfahrzeugs 10 nur im Falle des Bedarfs der Notbremsung und damit nur im Notfall verwendet wird. Dadurch, dass die Parkbremse 14 im Fahrbetrieb des Kraftfahrzeugs 10 nur im Notfall verwendet wird, kann die Wahrscheinlichkeit eines Ausfalls der Parkbremse 14, beispielsweise infolge einer Störung einer elektrischen Energieversorgung, maßgeblich verringert werden. Entsprechend gering ist die Wahrscheinlichkeit, dass das durch die Parkbremse 14 aufgebaute Bremsmoment B2 am Vorderrad 11 aufgrund einer Selbsthemmung der Parkbremse 14 nicht reduziert werden kann und das Vorderrad 11 durch die Parkbremse 14 festgebremst bleibt und damit dauerhaft blockiert.

### Bezugszeichenliste

- 10: Kraftfahrzeug
- 11: Vorderrad
- 12: weiteres Vorderrad
- 13: Betriebsbremsanlage
- 14: Parkbremse
- 15: Regeleinrichtung
- 16: Rückförderpumpe
- 17: Fahrzeugquerrichtung
- B1: erstes Bremsmoment
- B2: zweites Bremsmoment

## Patentansprüche

1. Verfahren zum Verzögern eines Kraftfahrzeugs (10) zumindest bei einer Notbremsung, bei welchem ein Aufbringen eines ersten Bremsmoments (B1) auf wenigstens ein Vorderrad (11) des Kraftfahrzeugs (10) durch zumindest eine Betriebsbremsanlage (13) des Kraftfahrzeugs erfolgt,
**dadurch gekennzeichnet, dass**
wenigstens eine von der zumindest einen Betriebsbremsanlage (13) verschiedene Parkbremse (14) durch eine Regeleinrichtung (15) des Kraftfahrzeugs (10) aktiviert wird und dadurch ein zweites Bremsmoment (B2) auf das wenigstens eine Vorderrad (11) aufgebracht wird, während das erste Bremsmoment (B1) aufgebracht wird, wobei das erste Bremsmoment (B1) und das zweite Bremsmoment (B2) nur dann gleichzeitig aufgebracht werden, wenn eine der Regeleinrichtung (15) bekannte Dynamik eines Aufbaus des ersten Bremsmoments (B1) geringer ist als eine von einer automatischen Fahrfunktion des Kraftfahrzeugs (10) geforderte Dynamik des Aufbaus des ersten Bremsmoments (B1).

2. Verfahren nach Anspruch 1,
**dadurch gekennzeichnet, dass**
die Parkbremse (14) während des Verzögerns wieder deaktiviert wird, wenn während des Verzögerns eine Eingriffsschwelle eines Antiblockiersystems des Kraftfahrzeugs (10) erreicht wird.

3. Verfahren nach Anspruch 1 oder 2,
**dadurch gekennzeichnet, dass**
das erste Bremsmoment (B1) und das zweite Bremsmoment (B2) beim Beginn des Verzögerns des Kraftfahrzeugs (10) gleichzeitig aufgebracht werden.

4. Verfahren nach einem der vorhergehenden Ansprüche,
**dadurch gekennzeichnet, dass**
das zweite Bremsmoment (B2) nach einem Zeitraum wieder deaktiviert wird, wobei der Zeitraum einer Dauer von 0,05 s bis 2 s, bevorzugt 0,1 s bis 1 s, entspricht.

5. Verfahren nach einem der vorhergehenden Ansprüche,
**dadurch gekennzeichnet, dass**
die Parkbremse (14) elektrisch betrieben wird.

6. Verfahren nach einem der vorhergehenden Ansprüche,
**dadurch gekennzeichnet, dass**
die Betriebsbremsanlage (13) hydraulisch betrieben wird.

7. Verfahren nach Anspruch 6,
**dadurch gekennzeichnet, dass**
ein zum Aufbringen des ersten Bremsmoments (B1) verwendeter Bremsdruck durch eine hydraulische Rückförderpumpe (16) der Betriebsbremsanlage (13) aufgebaut wird.

8. Kraftfahrzeug (10), umfassend eine Betriebsbremsanlage (13), mittels welcher ein erstes Bremsmoment (B1) auf wenigstens ein Vorderrad (11) des Kraftfahrzeugs (10) aufbringbar ist sowie wenigstens eine von der zumindest einen Betriebsbremsanlage (13) verschiedene Parkbremse (14),
**dadurch gekennzeichnet, dass**
das Kraftfahrzeug (10) eine Regeleinrichtung (15) umfasst, welche dazu eingerichtet ist, eine Notbremsung des Kraftfahrzeugs (10) zu erkennen und bei erkannter Notbremsung die wenigstens eine Parkbremse (14) zu aktivieren, um während des Aufbringens des ersten Bremsmoments (B1) mittels der wenigstens einen Parkbremse (14) ein zweites Bremsmoment (B2) auf das wenigstens eine Vorderrad (11) aufzubringen, wobei das Kraftfahrzeug (10) dazu eingerichtet ist, das erste Bremsmoment (B1) und das zweite Bremsmoment (B2) nur dann gleichzeitig aufzubringen, wenn eine der Regeleinrichtung (15) bekannte Dynamik eines Aufbaus des ersten Bremsmoments (B1) geringer ist als eine von einer automatischen Fahrfunktion des Kraftfahrzeugs (10) geforderte Dynamik des Aufbaus des ersten Bremsmoments (B1).

## Claims

1. Method for decelerating a motor vehicle (10) at least during emergency braking, in which a first braking torque (B1) is applied to at least one front wheel (11) of the motor vehicle (10) by at least one service brake system (13) of the motor vehicle,
**characterized in that**
at least one parking brake (14), which is different from the at least one service brake system (13), is activated by a control apparatus (15) of the motor vehicle (10) and, as a result, a second braking torque (B2) is applied to the at least one front wheel (11) while the first braking torque (B1) is applied,
the first braking torque (B1) and the second braking torque (B2) only being applied at the same time when dynamics of a structure of the first braking torque (B1) known to the control apparatus (15) are less than dynamics of the structure of the first braking torque (B1) required by an automatic driving function of the motor vehicle (10).

2. Method according to claim 1,
**characterized in that**
the parking brake (14) is deactivated again during deceleration when an intervention threshold of an anti-lock braking system of the motor vehicle (10) is reached during deceleration.

3. Method according to either claim 1 or claim 2,
**characterized in that**
the first braking torque (B1) and the second braking torque (B2) are applied at the same time at the beginning of deceleration of the motor vehicle (10).

4. Method according to any of the preceding claims,
**characterized in that**
the second braking torque (B2) is deactivated again after a period of time, the period of time corresponding to a duration of from 0.05 s to 2 s, preferably from 0.1 s to 1 s.

5. Method according to any of the preceding claims,
**characterized in that**
the parking brake (14) is electrically operated.

6. Method according to any of the preceding claims,
**characterized in that**
the service brake system (13) is hydraulically operated.

7. Method according to claim 6,
**characterized in that**
brake pressure, which is used to apply the first braking torque (B1), is built up by a hydraulic return pump (16) of the service brake system (13).

8. Motor vehicle (10), comprising a service brake system (13) by means of which a first braking torque (B1) can be applied to at least one front wheel (11) of the motor vehicle (10), and comprising at least one parking brake (14), which is different from the at least one service brake system (13),
**characterized in that**
the motor vehicle (10) comprises a control apparatus (15) which is designed to detect emergency braking of the motor vehicle (10) and to activate the at least one parking brake (14) when emergency braking is detected in order to apply a second braking torque (B2) to the at least one front wheel (11) by means of the at least one parking brake (14) while the first braking torque (B1) is applied, the motor vehicle (10) being designed to only apply the first braking torque (B1) and the second braking torque (B2) at the same time when dynamics of a structure of the first braking torque (B1) known to the control apparatus (15) are less than dynamics of the structure of the first braking torque (B1) required by an automatic driving function of the motor vehicle (10).

## Revendications

1. Procédé de décélération d'un véhicule automobile (10) au moins lors d'un freinage d'urgence, dans lequel une application d'un premier couple de freinage (B1) sur au moins une roue avant (11) du véhicule automobile (10) est effectuée par le biais d'au moins un système de frein de service (13) du véhicule automobile,
**caractérisé en ce que**
au moins un de l'au moins un système de frein de service (13) de différents freins de stationnement (14) est activé par le biais d'un dispositif de régulation (15) du véhicule automobile (10) et **en ce qu'**un second couple de freinage (B2) est appliqué sur l'au moins une roue avant (11), pendant que le premier couple de freinage (B1) est appliqué, dans lequel le premier couple de freinage (B1) et le second couple de freinage (B2) ne sont appliqués en même temps que lorsqu'une dynamique connue du dispositif de régulation (15) d'une accumulation du premier couple de freinage (B1) est plus faible qu'une dynamique demandée par une fonction de conduite automatique du véhicule automobile (10) de l'accumulation du premier couple de freinage (B1).

2. Procédé selon la revendication 1,
**caractérisé en ce que**
le frein de stationnement (14) est de nouveau désactivé pendant la décélération lorsque pendant la décélération, un seuil d'intervention d'un système antiblocage du véhicule automobile (10) est atteint.

3. Procédé selon la revendication 1 ou 2,
**caractérisé en ce que**
le premier couple de freinage (B1) et le second couple de freinage (B2) sont appliqués en même temps lors du début de la décélération du véhicule automobile (10).

4. Procédé selon l'une quelconque des revendications précédentes, **caractérisé en ce que**
le second couple de freinage (B2) est de nouveau désactivé après une période, dans lequel la période correspond à une durée de 0,05 s à 2 s, de préférence de 0,1 s à 1 s.

5. Procédé selon l'une quelconque des revendications précédentes, **caractérisé en ce que**
le frein de stationnement (14) est à actionnement électrique.

6. Procédé selon l'une quelconque des revendications précédentes, **caractérisé en ce que**
le système de frein de service (13) est à actionnement hydraulique.

7. Procédé selon la revendication 6,
**caractérisé en ce que**
une pression de freinage utilisée pour appliquer le premier couple de freinage (B1) est accumulée par une pompe de refoulement hydraulique (16) du système de frein de service (13).

8. Véhicule automobile (10), comprenant un système de frein de service (13), au moyen duquel un premier couple de freinage (B1) peut être appliqué sur au moins une roue avant (11) du véhicule automobile (10) ainsi qu'au moins un frein de stationnement (14) différent de l'au moins un système de frein de service (13),
**caractérisé en ce que**
le véhicule automobile (10) comprend un dispositif de régulation (15), qui est conçu pour reconnaître un freinage d'urgence du véhicule automobile (10) et, en cas de freinage d'urgence reconnu, activer l'au moins un frein de stationnement (14), afin d'appliquer pendant l'application du premier couple de freinage (B1) au moyen de l'au moins un frein de stationnement (14) un second couple de freinage (B2) sur l'au moins une roue avant (11), dans lequel le véhicule automobile (10) est conçu pour appliquer en même temps le premier couple de freinage (B1) et le second couple de freinage (B2) uniquement lorsqu'une dynamique connue du dispositif de régulation (15) d'une accumulation du premier couple de freinage (B1) est plus faible qu'une dynamique demandée par une fonction de conduite automatique du véhicule automobile (10) de l'accumulation du premier couple de freinage (B1).
